**Europäisches Patentamt**

**European Patent Office**

**Office européen des brevets**

(19)

(11) **EP 1 418 083 A2**

(12) **EUROPÄISCHE PATENTANMELDUNG**

(43) Veröffentlichungstag:
**12.05.2004 Patentblatt 2004/20**

(51) Int Cl.7: **B60K 41/02**, F16D 48/08

(21) Anmeldenummer: **03025636.6**

(22) Anmeldetag: **06.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **11.11.2002 DE 10252222**

(71) Anmelder: **LuK Lamellen und Kupplungsbau Beteiligungs KG**
**77815 Bühl (DE)**

(72) Erfinder:
- **Hirt, Gunter**
  **90617 Puschendorf (DE)**

- **Amendt, Oliver, Dr.**
  **71272 Renningen (DE)**
- **Martin, Jens**
  **76547 Sinzheim-Kartung (DE)**
- **Niessen, Wolfgang, Dr.**
  **76199 Karlsruhe (DE)**
- **Ahnert, Gerd**
  **77880 Sasbach (DE)**
- **Eggert, Thomas, Dr.**
  **76131 Karlsruhe (DE)**
- **Benz, Jürgen**
  **77704 Oberkirch (DE)**
- **Schmitt, Werner**
  **76547 Sinzheim (DE)**
- **Winkler, Oliver**
  **77871 Renchen (DE)**

(54) **Verfahren, Vorrichtung und deren Verwendung zum Betrieb eines Kraftfahrzeuges**

(57)   Es werden Verfahren und Vorrichtungen zum Betrieb eines Kraftfahrzeuges (1) mit einem Antriebsmotor (2) und einem Getriebe (4) im Antriebsstrang vorgeschlagen.

## Fig. 2

**Nominelle Stellmomentenkennlinie**

**Beschreibung**

Die Erfindung betrifft ein Verfahren, eine Vorrichtung und deren Verwendung zum Betrieb eines Kraftfahrzeuges mit einem Antriebsmotor und einem Getriebe im Antriebsstrang.

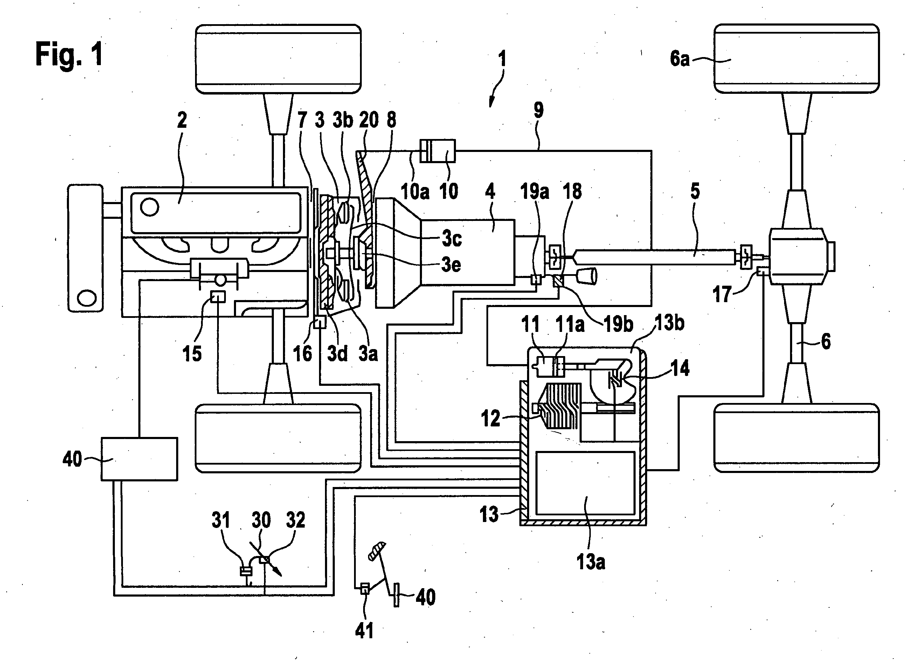

Gemäß Figur 1 weist ein Fahrzeug 1 eine Antriebseinheit 2, wie einen Motor oder eine Brennkraftmaschine, auf. Weiterhin sind im Antriebsstrang des Fahrzeuges 1 ein Drehmomentübertragungssystem 3 und ein Getriebe 4 angeordnet. In diesem Ausführungsbeispiel ist das Drehmomentübertragungssystem 3 im Kraftfluss zwischen Motor und Getriebe angeordnet, wobei ein Antriebsmoment des Motors über das Drehmomentübertragungssystem 3 an das Getriebe 4 und von dem Getriebe 4 abtriebsseitig an eine Abtriebswelle 5 und an eine nachgeordnete Achse 6 sowie an die Räder 6a übertragen wird.

Das Drehmomentübertragungssystem 3 ist als Kupplung, wie z. B. als Reibungskupplung, Lamellenkupplung, Magnetpulverkupplung oder Wandlerüberbrückungskupplung, ausgestaltet, wobei die Kupplung eine selbsteinstellende oder eine verschleißausgleichende Kupplung sein kann. Das Getriebe 4 ist ein unterbrechungsfreies Schaltgetriebe (USG). Entsprechend dem erfindungsgemäßen Gedanken kann das Getriebe auch ein automatisiertes Schaltgetriebe (ASG) sein, welches mittels zumindest eines Aktors automatisiert geschaltet werden kann. Als automatisiertes Schaltgetriebe ist im Weiteren ein automatisiertes Getriebe zu verstehen, welches mit einer Zugkraftunterbrechung geschaltet wird und bei dem der Schaltvorgang der Getriebeübersetzung mittels zumindest eines Aktors angesteuert durchgeführt wird.

Weiterhin kann als USG auch ein Automatgetriebe Verwendung finden, wobei ein Automatgetriebe ein Getriebe im wesentlichen ohne Zugkraftunterbrechung bei den Schaltvorgängen ist und das in der Regel durch Planetengetriebestufen aufgebaut ist.

Weiterhin kann ein stufenlos einstellbares Getriebe, wie beispielsweise Kegelscheibenumschlingungsgetriebe eingesetzt werden. Das Automatgetriebe kann auch mit einem abtriebsseitig angeordneten Drehmomentübertragungssystem 3, wie eine Kupplung oder eine Reibungskupplung, ausgestaltet sein. Das Drehmomentübertragungssystem 3 kann weiterhin als Anfahrkupplung und/oder Wendesatzkupplung zur Drehrichtungsumkehr und/oder Sicherheitskupplung mit einem gezielt ansteuerbaren übertragbaren Drehmoment ausgestaltet sein. Das Drehmomentübertragungssystem 3 kann eine Trockenreibungskupplung oder eine nass laufende Reibungskupplung sein, die beispielsweise in einem Fluid läuft. Ebenso kann es ein Drehmomentwandler sein.

Das Drehmomentübertragungssystem 3 weist eine Antriebsseite 7 und eine Abtriebsseite 8 auf, wobei ein Drehmoment von der Antriebsseite 7 auf die Abtriebsseite 8 übertragen wird, indem z. B. die Kupplungsscheibe 3a mittels der Druckplatte 3b, der Tellerfeder 3c und dem Ausrücklager 3e sowie dem Schwungrad 3d kraftbeaufschlagt wird. Zu dieser Beaufschlagung wird der Ausrückhebel 20 mittels einer Betätigungseinrichtung, z.B. einem Aktor, betätigt.

Die Ansteuerung des Drehmomentübertragungssystems 3 erfolgt mittels einer Steuereinheit 13, wie z. B. einem Steuergerät, welches die Steuerelektronik 13a und den Aktor 13b umfassen kann. In einer anderen vorteilhaften Ausführung können der Aktor 13b und die Steuerelektronik 13a auch in zwei unterschiedlichen Baueinheiten, wie z. B. Gehäusen, angeordnet sein.

Die Steuereinheit 13 kann die Steuer- und Leistungselektronik zur Ansteuerung des Antriebsmotors 12 des Aktors 13b enthalten. Dadurch kann beispielsweise vorteilhaft erreicht werden, dass das System als einzigen Bauraum den Bauraum für den Aktor 13b mit Elektronik benötigt. Der Aktor 13b besteht aus dem Antriebsmotor 12, wie z.B. einem Elektromotor, wobei der Elektromotor 12 über ein Getriebe, wie z.B. ein Schneckengetriebe, ein Stirnradgetriebe, ein Kurbelgetriebe oder ein Gewindespindelgetriebe, auf einen Geberzylinder 11 wirkt. Diese Wirkung auf den Geberzylinder 11 kann direkt oder über ein Gestänge erfolgen.

Die Bewegung des Ausgangsteiles des Aktors 13b, wie z. B. des Geberzylinderkolbens 11a, wird mit einem Kupplungswegsensor 14 detektiert, welcher die Position oder Stellung oder die Geschwindigkeit oder die Beschleunigung einer Größe detektiert, welche proportional zur Position bzw. Einrückposition respektive der Geschwindigkeit oder Beschleunigung der Kupplung ist. Der Geberzylinder 11 ist über eine Druckmittelleitung 9, wie z.B. eine Hydraulikleitung, mit dem Nehmerzylinder 10 verbunden. Das Ausgangselement 10a des Nehmerzylinders ist mit dem Ausrückmittel 20, z.B. einem Ausrückhebel, wirkverbunden, so dass eine Bewegung des Ausgangsteiles 10a des Nehmerzylinders 10 bewirkt, dass das Ausrückmittel 20 ebenfalls bewegt oder verkippt wird, um das von der Kupplung 3 übertragbare Drehmoment anzusteuern.

Der Aktor 13b zur Ansteuerung des übertragbaren Drehmoments des Drehmomentübertragungssystems 3 kann druckmittelbetätigbar sein, d.h., er kann einen Druckmittelgeber- und Nehmerzylinder aufweisen. Das Druckmittel kann beispielsweise ein Hydraulikfluid oder ein Pneumatikmedium sein. Die Betätigung des Druckmittelgeberzylinders kann elektromotorisch erfolgen, wobei der als Antriebselement 12 vorgesehene Elektromotor elektronisch angesteuert werden kann. Das Antriebselement 12 des Aktors 13b kann neben einem elektromotorischen Antriebselement auch ein anderes, beispielsweise druckmittelbetätigtes Antriebselement sein. Weiterhin können Magnetaktoren verwendet werden, um eine Position eines Elementes einzustellen.

Bei einer Reibungskupplung erfolgt die Ansteuerung des übertragbaren Drehmomentes dadurch, dass die Anpressung der Reibbeläge der Kupplungsscheibe zwischen dem Schwungrad 3d und der Druckplatte 3b gezielt erfolgt. Über die Stellung des Ausrückmittels 20, wie z.B. einer Ausrückgabel oder eines Zentralausrückers, kann die Kraftbeaufschlagung der Druckplatte 3b respektive der Reibbeläge gezielt angesteuert werden, wobei die Druckplatte 3b dabei zwischen zwei Endpositionen bewegt und beliebig eingestellt und fixiert werden kann. Die eine Endposition entspricht einer völlig eingerückten Kupplungsposition und die andere Endposition einer völlig ausgerückten Kupplungsposition. Zur Ansteuerung eines übertragbaren Drehmomentes, welches beispielsweise geringer ist als das momentan anliegende Motormoment, kann beispielsweise eine Position der Druckplatte 3b angesteuert werden, die in einem Zwischenbereich zwischen den beiden Endpositionen liegt. Die Kupplung kann mittels der gezielten Ansteuerung des Ausrückmittels 20 in dieser Position fixiert werden. Es können aber auch übertragbare Kupplungsmomente angesteuert werden, die definiert über den momentan anstehenden Motormomenten liegen. In einem solchen Fall können die aktuell anstehenden Motormomente übertragen werden, wobei die Drehmoment-Ungleichförmigkeiten im Antriebsstrang in Form von beispielsweise Drehmomentspitzen gedämpft und/oder isoliert werden.

Zur Ansteuerung des Drehmomentübertragungssystems 3 werden weiterhin Sensoren verwendet, die zumindest zeitweise die relevanten Größen des gesamten Systems überwachen und die zur Steuerung notwendigen Zustandsgrößen, Signale und Messwerte liefern, die von der Steuereinheit verarbeitet werden, wobei eine Signalverbindung zu anderen Elektronikeinheiten, wie beispielsweise zu einer Motorelektronik oder einer Elektronik eines Antiblockiersystems (ABS) oder einer Antischlupfregelung (ASR) vorgesehen sein kann und bestehen kann. Die Sensoren detektieren beispielsweise Drehzahlen, wie Raddrehzahlen, Motordrehzahlen, die Position des Lasthebels, die Drosselklappenstellung, die Gangposition des Getriebes, eine Schaltabsicht und weitere fahrzeugspezifische Kenngrößen.

Die Fig. 1 zeigt, dass ein Drosselklappensensor 15, ein Motordrehzahlsensor 16 sowie ein Tachosensor 17 Verwendung finden können und Messwerte bzw. Informationen an das Steuergerät 13 weiterleiten. Die Elektronikeinheit, wie z.B. eine Computereinheit, der Steuerelektronik 13a verarbeitet die Systemeingangsgrößen und gibt Steuersignale an den Aktor 13b weiter.

Das Getriebe ist als z.B. Stufenwechselgetriebe ausgestaltet, wobei die Übersetzungsstufen mittels eines Schalthebels 18 gewechselt werden oder das Getriebe mittels dieses Schalthebels 18 betätigt oder bedient wird. Weiterhin ist an dem Schalthebel 18 des Handschaltgetriebes zumindest ein Sensor 19b angeordnet, welcher die Schaltabsicht und/oder die Gangposition detektiert und an das Steuergerät 13 weiterleitet. Der Sensor 19a ist am Getriebe angelenkt und detektiert die aktuelle Gangposition und/oder eine Schaltabsicht. Die Schaltabsichtserkennung unter Verwendung von zumindest einem der beiden Sensoren 19a, 19b kann dadurch erfolgen, dass der Sensor ein Kraftsensor ist, welcher die auf den Schalthebel 18 wirkende Kraft detektiert. Weiterhin kann der Sensor aber auch als Weg- oder Positionssensor ausgestaltet sein, wobei die Steuereinheit aus der zeitlichen Veränderung des Positionssignals eine Schaltabsicht erkennt.

Das Steuergerät 13 steht mit allen Sensoren zumindest zeitweise in Signalverbindung und bewertet die Sensorsignale und Systemeingangsgrößen in der Art und Weise, dass in Abhängigkeit von dem aktuellen Betriebspunkt die Steuereinheit Steuer- oder Regelungsbefehle an den zumindest einen Aktor 13b ausgibt. Der Antriebsmotor 12 des Aktors 13b, z.B. ein Elektromotor, erhält von der Steuereinheit, welche die Kupplungsbetätigung ansteuert, eine Stellgröße in Abhängigkeit von Messwerten und/oder Systemeingangsgrößen und/oder Signalen der angeschlossenen Sensorik. Hierzu ist in dem Steuergerät 13 ein Steuerprogramm als Hard- und/oder als Software implementiert, das die eingehenden Signale bewertet und anhand von Vergleichen und/oder Funktionen und/oder Kennfeldern die Ausgangsgrößen berechnet oder bestimmt.

Das Steuergerät 13 hat in vorteilhafter Weise eine Drehmomentbestimmungseinheit, eine Gangpositionsbestimmungseinheit, eine Schlupfbestimmungseinheit und/oder eine Betriebszustandsbestimmungseinheit implementiert oder es steht mit zumindest einer dieser Einheiten in Signalverbindung. Diese Einheiten können durch Steuerprogramme als Hardware und/oder als Software implementiert sein, so dass mittels der eingehenden Sensorsignale das Drehmoment der Antriebseinheit 2 des Fahrzeuges 1, die Gangposition des Getriebes 4 sowie der Schlupf, welcher im Bereich des Drehmomentübertragungssystems 3 herrscht und der aktuelle Betriebszustand des Fahrzeuges 1 bestimmt werden können. Die Gangpositionsbestimmungseinheit ermittelt anhand der Signale der Sensoren 19a und 19b den aktuell eingelegten Gang. Dabei sind die Sensoren 19a, 19b am Schalthebel und/oder an getriebeinternen Stellmitteln, wie beispielsweise einer zentralen Schaltwelle oder Schaltstange, angelenkt und diese detektieren, beispielsweise die Lage und/oder die Geschwindigkeit dieser Bauteile. Weiterhin kann ein Lasthebelsensor 31 am Lasthebel 30, wie z.B. an einem Gaspedal, angeordnet sein, welcher die Lasthebelposition detektiert. Ein weiterer Sensor 32 kann als Leerlaufschalter fungieren, d.h. bei betätigtem Lasthebel 30 bzw. Gaspedal ist dieser Leerlaufschalter 32 eingeschaltet und bei nicht betätigtem Lasthebel 30 ist er ausgeschaltet, so dass durch diese digitale Information erkannt werden kann, ob der Lasthebel 30 betätigt wird. Der Lasthebelsensor 31 detektiert den Grad der Betätigung des Lasthebels 30.

Die Fig. 1 zeigt neben dem Lasthebel 30 und den damit in Verbindung stehenden Sensoren ein Bremsenbetätigungselement 40 zur Betätigung der Betriebsbremse oder der Feststellbremse, wie z.B. ein Bremspedal, einen Handbremshebel oder ein hand- oder fußbetätigtes Betätigungselement der Feststellbremse. Zumindest ein Sensor 41 ist an dem Betätigungselement 40 angeordnet und überwacht dessen Betätigung. Der Sensor 41 ist beispielsweise als digitaler Sensor, wie z. B. als Schalter, ausgestaltet, wobei dieser detektiert, dass das Bremsenbetätigungselement 40 betätigt oder nicht betätigt ist. Mit dem Sensor 41 kann eine Signaleinrichtung, wie z.B. eine Bremsleuchte, in Signalverbindung stehen, welche signalisiert, dass die Bremse betätigt ist. Dies kann sowohl für die Betriebsbremse als auch für die Feststellbremse erfolgen. Der Sensor 41 kann jedoch auch als analoger Sensor ausgestaltet sein, wobei ein solcher Sensor, wie beispielsweise ein Potentiometer, den Grad der Betätigung des Bremsenbetätigungselementes 41 ermittelt. Auch dieser Sensor kann mit einer Signaleinrichtung in Signalverbindung stehen.

Im folgendem wird nun die erfindungsgemäße Übertragung eines variablen Tastmomentes bei der Greifpunktadaption erläutert. Dabei wird aufgabengemäß eine Komfortbeeinträchtigung durch die Tastrampen der Greifpunktadaption reduziert.

Bei der Greifpunktadaption wird in regelmäßigen Abständen z. B. alle 30 sec.) für einen vorgegebenen Zeitraum ein konstantes Kupplungssollmoment, das sogenannte "Tastmoment" aufgebaut. Je nach Übertragungsverhalten der hydraulischen Strecke - abhängig u.a. vom zeitlichen Abstand zum letzten Volumenausgleich - werden beim Tasten an der Kupplung mehr oder weniger Moment als das gewünschte Tastmoment übertragen. Bei der Greifpunktadaption ergeben sich aus diesem Zusammenhang prinzipiell die folgenden drei Situationen:

Fall 1:

Im Idealfall wird an der Kupplung gerade das gewünschte Tastmoment übertragen, wobei das übertragene Moment aus dem Motormomentensignal bestimmt werden kann. In diesem Falle wird der Motor im Leerlauf nur sehr wenig belastet. Die geringfügige Komfortbeeinträchtigung infolge der Tastrampen wird vom Benutzer akzeptiert. Der im Steuergerät gespeicherte Softwaregreifpunkt wird beibehalten.

Fall 2:

Die Kupplung überträgt weniger als das gewünschte Tastmoment. Der Motor wird kaum durch die Kupplung belastet. Komfortprobleme treten nicht auf. Der Softwaregreifpunkt wird nach der Tastrampe verkleinert.

Fall 3:

Die Kupplung überträgt während der Tastrampe mehr als das gewünschte Tastmoment. Der Motor wird unzulässig stark durch das Tastmoment belastet. Der Softwaregreifpunkt wird nach der Tastrampe vergrößert. Die auftretenden Brummgeräusche/Vibrationen werden vom Benutzer bemängelt.

Um diesen kritischen Fall (Fall 3) auszuschließen, kann bei der Greifpunktadaption erfindungsgemäß vorgesehen sein, dass anstatt der Einstellung eines festen vorgegebenen Sollwegs ("Tastmoment") am Geberzylinder das Kupplungsmoment beim Tasten so lange erhöht wird, bis entweder das gewünschte Sollmoment erreicht ist, oder aber die Motormomentenerhöhung das gewünschte Tastmoment überschreitet.

Während in den Fällen 1 und 2 nach wie vor das Tastmoment vollständig aufgebaut wird, kann in Fall 3 der Momentenaufbau beim Tasten bereits vor Erreichen des Sollmomentes beendet werden (z.B. bei 1,5 Nm).

An der Bestimmung des Greifpunktinkrementes aus dem Verhältnis zwischen Kupplungsmomentenerhöhung und daraus resultierender Motormomentenerhöhung ändert sich lediglich, dass die Erhöhung im Kupplungsmoment nicht mehr konstant 2 Nm sonder • 2 Nm ist.

Die erfindungsgemäße Übertragung des Tastmomentes kann bevorzugt bei sämtlichen Systemen mit automatisierter Kupplungsbetätigung eingesetzt werden.

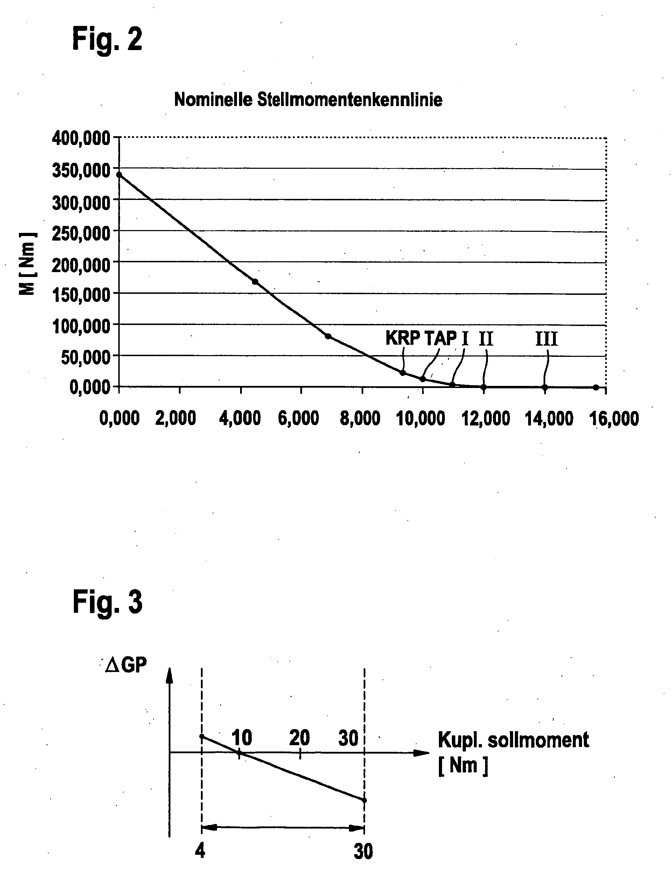

Es wird nachfolgend eine erfindungsgemäße getrennte Kriech- und Tastpunktadaption im Zusammenhang mit der Figur 2 näher erläutert.

Dabei besteht die Aufgabe der Erfindung darin, die Kennlinienadaption zu optimieren.

Aus Komfortgründen sollte das Tastmoment bei der Tastpunktadaption so niedrig wie möglich gewählt werden (derzeit z. B. 2 Nm). Die gesamte in der Software verwendete Stellmomentenkennlinie wird um die Differenz zwischen adaptiertem und nominellem Tastpunkt gegenüber der nominellen Stellmomentenkennlinie parallel verschoben.

Die statistische Auswertung gemessener Kupplungskennlinien zeigt, dass die Kennlinien gerade im Trennbereich, z. B. bei Momenten unterhalb des Greifpunkten von 9 Nm, stark streuen, während im Bereich hoher Momente eine gute Übereinstimmung zu finden ist. Das bedeutet jedoch, dass je weiter das Tastmoment abgesenkt wird (s.o.) desto genauer wird die Tastpunktadaption den Trennbereich abbilden. Der Fehler im Kennlinienbereich hoher Momente wird jedoch ansteigen.

Aus diesen Überlegungen ergibt sich folgendes Problem. Um eine gute Übereinstimmung zwischen Stellmomentenkennlinie und physikalischer Kupplungskennlinie im Bereich hoher Momente zu erreichen, sollte das Tastmoment möglichst hoch gewählt werden. Um eine gute Übereinstimmung im Bereich des Trennpunktes zu erreichen, sollte das Tastmoment dagegen möglichst niedrig gewählt werden.

Diese Problematik kann erfindungsgemäß dadurch gelöst werden, dass zusätzlich zum bisherigen Tastpunkt ein zweiter Punkt der Kennlinie adaptiert wird. Hierzu bietet sich das Kriechmoment an, da eine Adaption beim Kriechen bereits realisiert ist. Das Kriechmoment liegt fahrzeugtypabhängig im Bereich zwischen 10 Nm und 14 Nm und damit oberhalb des Bereiches, in dem mit starken Streuungen zwischen den Kupplungskennlinien zu rechnen ist. Analog zum bisherigen Tastpunkt legt dieser "Kriechpunkt", welcher in Figur 2 mit KRP bezeichnet ist, die Stellmomentenkennlinie oberhalb des Kriechmomentes fest. Die Parallelverschiebung der Kennlinie ergibt sich aus der Differenz zwischen dem nominellen und dem adaptierten Kriechpunkt.

Der nach wie vor adaptierte Tastpunkt, welcher in Figur 2 mit TAP bezeichnet ist, ist völlig unabhängig vom Kriechpunkt. Alle Stützstellen der Stellmomentenkennlinie vom Tastpunkt aus in Richtung offener Kupplung (Trennpunkt, Bereitschaftspunkt, Hub) werden als Offset auf den Tastpunkt definiert. Ein Trennpunkt I kann durch den Tastpunkt TAP + 1 mm, ein Bereitschaftspunkt II kann durch den Tastpunkt TAP + 2 mm und ein Hub III kann durch den Tastpunkt TAP + 4 mm definiert werden.

Analog zur bisherigen Kennlinienadaption wirkt der Reibwert dann erst oberhalb des Kriechmomentes. Dadurch bleiben Kriech- und Tastpunktadaption unabhängig vom aktuellen Reibwert.

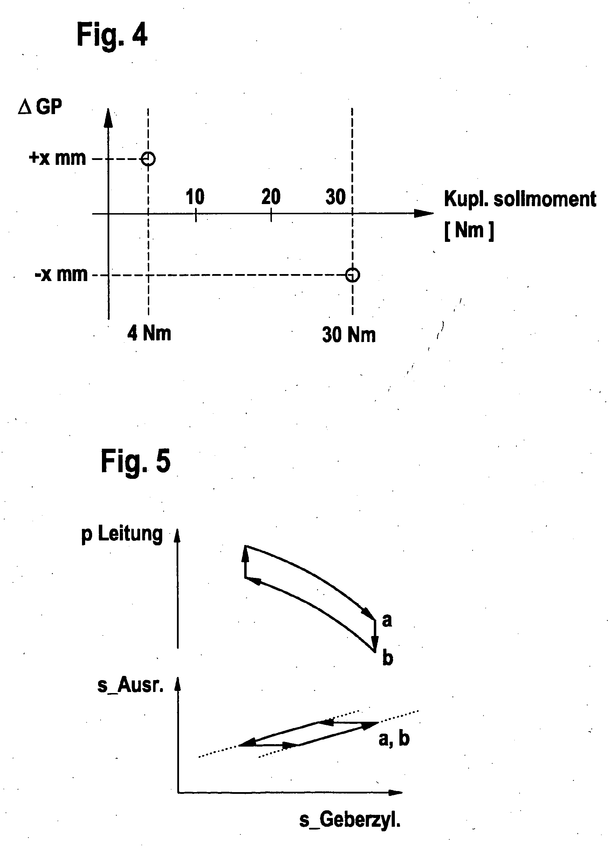

Im Zusammenhang mit den Figuren 3 und 4 wird nachfolgend eine Greifpunktadaption beim Kriechen näher erläutert.

Da die Greifpunktadaption bei stehendem Fahrzeug und eingelegtem Gang nicht zwingend von jedem Fahrer aktiviert wird, sollen erfindungsgemäß Fahrsituationen zur Adaption des Greifpunkts ausgewertet werden.

Bei einer derzeit aktivierten Kriechfunktion soll ein Kriechmoment von 10 Nm an der Kupplung eingestellt werden. Dafür wird das Kriechmoment über 2 Rampenfunktionen so lange erhöht, bis die Differenz zwischen dem Motormoment bei unbelastetem Motor (Kupplung offen) und dem Motormoment beim Kriechen 10 Nm beträgt. Das Motormoment wird als Maß für das tatsächlich wirkende Kupplungsmoment verwendet. Um Ungenauigkeiten des Greifpunkts zu kompensieren, wird bei dieser Kriechfunktion ein Kupplungssollmoment zwischen 4 und 30 Nm zugelassen.

Falls der Greifpunkt korrekt eingestellt ist, sollte an der Kupplung ein Sollmoment von 10 Nm eingestellt werden, um ein tatsächliches Kupplungsmoment von 10 Nm aufzubringen. Wenn beispielsweise ein Sollmoment von 4 Nm dafür ausreicht, ist der in der Software abgelegte Greifpunkt deutlich zu niedrig eingestellt. Wenn hingegen ein Sollmoment von 30 Nm benötigt wird, ist der Software-Greifpunkt zu hoch angesetzt.

Zur Lösung dieses Problems werden folgende Strategien vorgeschlagen.

Bei einer ersten Strategie 1 wird vorgesehen, dass das Greifpunkt-Inkrement bevorzugt proportional zur Abweichung des Kupplungssollmoments zum Wert 10 Nm ist.

Bei jedem Kriechvorgang kann der Greifpunkt über eine Zeitrampe, um einen bestimmten Betrag adaptiert werden, wobei dieser Betrag vorzugsweise proportional zur Differenz zwischen dem eingestellten Sollmoment und dem tatsächlichen Kriechmoment (10 Nm) ist.

In Figur 3 ist der Greifpunkt • GP über dem Kupplungssollmoment dargestellt. Der Greifpunkt kann durch folgende Beziehung bestimmt werden:

$$\bullet \, GP = K \cdot (MR_{Soll} - 10 \, Nm)$$

Wenn beim Kriechen ein Sollmoment von 10 Nm eingestellt wird, ist der Greifpunkt korrekt bei • Greifpunkt=0. Wenn beim Kriechen ein Sollmoment > 10 Nm eingestellt wird, ist der abgelegte Greifpunkt zu hoch. Folglich gilt:

$$\bullet \, GREIFPUNKT < 0$$

Wenn beim Kriechen ein Sollmoment < 10 Nm eingestellt ist, so ist der abgelegte Greifpunkt zu niedrig. Folglich gilt:

$$\bullet \, GREIFPUNKT > 0$$

Ferner wird eine zweite Strategie 2 vorgeschlagen, welche eine "Notadaption" des Greifpunkts beim Kriechen vorsieht. Wenn beim Kriechen der untere bzw. der obere Grenzwert des zulässigen Kupplungssollmoments eingestellt wird, z. B. 4 Nm bzw. 30 Nm, ist dies ein Indiz dafür, dass die aufgetretenen Greifpunkt-Fehler nicht mehr - bzw. gerade noch - mit Hilfe der Kriechstrategie ausgeglichen werden können. In diesem Fall könnte der Greifpunkt gemäß Figur 4 um einen bestimmten Betrag "in die richtige Richtung" verschoben werden, vorzugsweise über eine Zeitrampe.

Bei den beiden Strategien könnte die bisherige Logik mit "langfristigem und kurzfristigem Greifpunkt" verwendet werden. Der kurzfristige Greifpunkt, welcher insbesondere thermische Verschiebungen ausgleicht, kann bei jedem Kriechvorgang adaptiert werden. Der langfristige Greifpunkt, welcher insbesondere den Verschleiß ausgleicht, wird nur dann verändert, wenn der letzte Schnüffelvorgang max. n Sekunden zurückliegt, z. B. 30s. Der kurzfristige Greifpunkt kann bei jedem Schnüffelvorgang auf den langfristigen Greifpunkt zurückgesetzt werden, wobei der kurzfristige Greifpunkt bevorzugt in die Software-Kupplungskennlinie eingerechnet wird. Es ist auch möglich andere Greifpunkte zu verwenden.

Nachfolgend wird im Rahmen einer weiteren Ausgestaltung der vorliegenden Erfindung eine Möglichkeit beschrieben, welche Weghysteresen in der Ansteuerung der Kupplung insbesondere bei einem elektronischen Kupplungsmanagement berücksichtigt.

Insgesamt wird die Wirkung von Krafthysteresen auf die jeweiligen Ausrückerwege erläutert.

Die Betätigung einer automatischen bzw. automatisierten Kupplung kann durch eine hydrostatische Weg-Übertragungsstrecke vom Geberzylinder über eine Leitung zum Zentralausrückers erfolgen. Durch die verwendeten Elastizitäten ändert sich die hydraulische Übersetzung in Abhängigkeit des Druckes. Somit können sich Krafthysteresen und daraus resultierende Druckhysteresen auf den Ausrückerweg auswirken. Ziel ist es, den Einfluss zu messen und dessen Auswirkungen abzuschätzen sowie entsprechende Gegenmaßnahmen vorzuschlagen.

Es hat sich gezeigt, dass durch Krafthysteresen insbesondere bei einer Richtungsumkehr des Geberzylinders ein Totwegverhalten des Ausrückerkolbens von etwa 0,5 mm auftritt. Durch dynamische Einflüsse kann sich die Hysterese verringern oder auch z. B. durch Temperatureinflüsse verstärken. Die Kupplungskennlinie hat in der Regel einen Gradienten von ca. 30 Nm/mm. Dies bedeutet, dass die hydraulische Strecke mit einem Totwegverhalten von 0,5 mm mit ihrer momentanen Ansteuerung eine Unempfindlichkeit von ca. 15 Nm aufweist. Somit ist mit der bekannten Steuerung eine genaue Momentennachführung erschwert.

Als Abhilfemaßnahme kann z. B. vorgesehen sein, dass bevorzugt zwei Stellmomentenkennlinien hinterlegt werden, die richtungsabhängig eingelesen werden können. Beispielsweise kann eine zweite Stellmomentenkennlinie auch durch einen Offset realisiert werden, welcher bevorzugt temperaturabhängig durchgeführt werden kann. Eine weitere Verbesserung der Momentennachführung kann durch genaue Kenntnis des Hysteresverhaltens in Abhängigkeit der Temperatur und/oder von dynamischen Einflüssen oder dgl. erreicht werden.

Es hat sich gezeigt, dass die Änderung der Druckhysterese $d\_hyst_{Geberzylinder}$ von der Temperatur, dem Druck, dem Verschleiß, der Verschmutzung, der Verfahrgeschwindigkeit oder dgl. abhängig ist.

Die Weghysterese und somit auch die hydraulische Übersetzung $i_{hydraulisch}$ ist ferner von der Elastizität der Betätigungstrecke abhängig. Somit ergeben sich Abhängigkeiten von dem Durchmesser des Geber- und des Nehmerzylinders, von sonstigen Geometrien der Leitungen, wie z.B. der Länge, des Durchmessers oder dgl., der Materialien der Leitungen, der Temperatur, dem Druck, der Alterung der mechanischen Elemente, wie z.B. Schläuche oder dgl., der Alterung des Wirkmediums oder dgl.

Somit ergibt sich eine Abhängigkeit der Weghysterese von vielen veränderlichen Faktoren.

Die Einflüsse auf die Weghysterese des Geberzylinders $d\_hyst_{Geberzylinder}$ und die hydraulische Übersetzung $i_{hydraulisch}$ können gemessen, berechnet oder aus Kennlinien, wie z.B. der Elastizität über dem Alter, ermittelt werden.

Die Wegabweichung des Ausrückers hängt insbesondere von dem Leitungsdruck und somit auch von den Krafthysteresen ab. Darum müssen sich die Krafthysteresen in Form von Weghysteresen äußern.

In Figur 5 ist das Totwegverhalten des Ausrückers in zwei übereinander dargestellten Diagrammen angedeutet, wobei in dem unteren Diagramm durch die beiden Doppelpfeile der Totweg T des Ausrückers angegeben ist. Aus Figur 5 ist ersichtlich, dass sich, wenn der Geberzylinder ausfährt, der Leitungsdruck im oberen Teil der Druckhysterese bewegt, welches durch die Krafthysterese des Zentralausrückers und der Kupplung verursacht wird. Der Ausrücker bewegt sich auf der unteren Weghysterese. Wenn der Geberzylinder stehen bleibt, verharrt der Ausrücker in Position a. Wenn nun der Geberzylinder einfährt, fällt der Leitungsdruck zuerst einmal ab, welches durch Punkt b gekennzeichnet ist. Dies kann aber den Ausrücker nicht veranlassen auszufahren, denn der Ausrücker verharrt in seiner Lage (Punkt b), bis der Stellerweg so weit zurück gefahren ist, dass sich der Ausrücker auf seiner oberen Weghysterese zurückbewegen kann. Der gleiche Effekt tritt wiederum auf, wenn der Geberzylinder seine Richtung von einfahren zu ausfahren ändert, also eine Richtungsumkehr vorliegt.

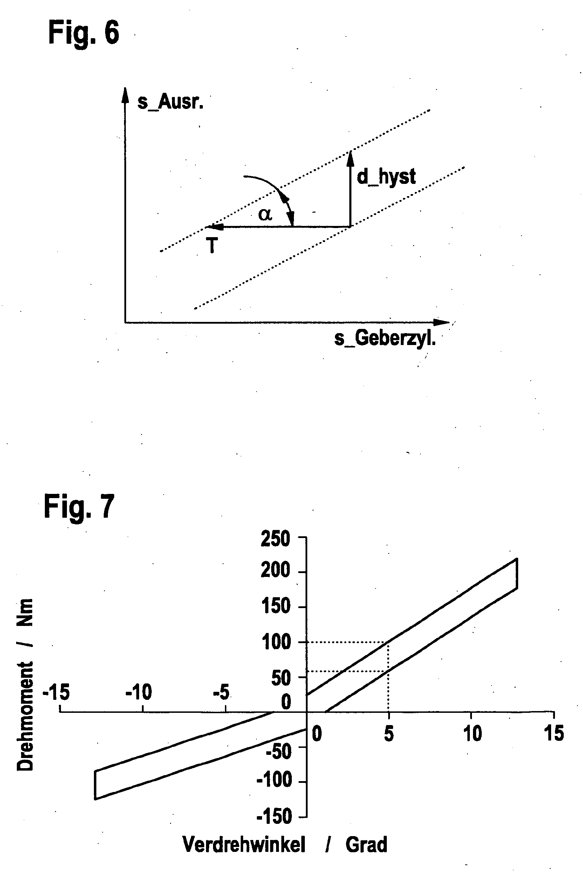

Die Berechnung des Totwegverhaltens ist in Figur 6 schematisch dargestellt, wobei die obere gestrichelte Linie die obere Weghysterese und die untere gestrichelte Linie die untere Weghysterese andeutet. Aus der Druckhysterese kann über die Zuordnung von Druck zu Wegverlust beim Ausrücker die Weghysterese des Ausrückers d_hyst berechnet werden. Der Steigungswinkel • lässt sich über die hydraulische Übersetzung $i_{hydraulisch}$ berechnen. Dies kann gemäß der folgenden Formel erfolgen:

$$\tan \bullet = d\_ausr / d\_st = 1 / i_{hydraulisch}$$

Der Totweg T am Geberzylinder kann aus dem Steigungswinkel • und der Weghysterese des Ausrückers d_hyst wie folgt berechnet werden:

$$T = d\_hyst \, / \, \tan \bullet$$

$$T = d\_hyst * i_{hydraulisch}$$

Wenn der Fehlweg des Geberzylinders für eine gegebene Druckhysterese bekannt ist kann der Totweg T wie folgt berechnet werden:

$$T = d\_hyst * i_{hydraulisch} = (d\_hyst_{\,Geberzylinder} \, / \, i_{hydraulisch}) * i_{hydraulisch}$$

$$T = d\_hyst_{\,Geberzylinder}$$

Erfindungsgemäß wird nun vorgeschlagen, dass die Weghysterese in der Ansteuerung der Kupplung berücksichtigt wird. Hierbei ergeben sich verschiedene Möglichkeiten.

Eine erste Möglichkeit besteht darin, dass bevorzugt für jede Bewegungsrichtung eine fixe Kennlinie für die Zuordnung zwischen dem Geber- und dem Nehmerzylinder in der Kupplungssteuerung hinterlegt wird. Auf diese Weise kann ein mittlerer Fehler berücksichtigt werden.

Eine zweite Möglichkeit kann darin liegen, für jede Bewegungsrichtung eine Kennlinie für die Zuordnung zwischen dem Geber- und dem Nehmerzylinder in der Steuerung zu hinterlegen und deren Abstände variabel auszugestalten. Dabei können Änderungen von Weghysterese des Geberzylinders $d\_hyst_{Geberzylinder}$ berücksichtigt werden.

Eine dritte Möglichkeit sieht vor, eine Kennlinie für die Zuordnung zwischen Geber- und Nehmerzylinder zu hinterlegen und hieraus eine zweite Kennlinie über die Weghysterese des Geberzylinders $d\_hyst_{Geberzylinder}$ zu berechnen. Auch bei dieser Möglichkeit werden Änderungen bei der Weghysterese des Geberzylinders $d\_hyst_{Geberzylinder}$ berücksichtigt.

Eine vierte Möglichkeit sieht vor, dass eine mittlere Kennlinie für die Zuordnung zwischen dem Geberzylinder und dem Nehmerzylinder hinterlegt wird und hieraus anteilig über die Weghysterese des Geberzylinders $d\_hyst_{Geberzylinder}$ beide Kennlinien zu berechnen. Auch bei dieser Möglichkeit werden Änderungen von der Weghysterese des Geberzylinders $d\_hyst_{Geberzylinder}$ berücksichtigt.

Bei einer fünften Möglichkeit wird eine Kennlinie für die Zuordnung zwischen dem Geber- und Nehmerzylinder ($i_{hydraulisch}$) berechnet und hieraus die zweite Kennlinie über Weghysterese des Geberzylinders $d\_hyst_{Geberzylinder}$ berechnet. Bei dieser Möglichkeit werden in vorteilhafter Weise sowohl Änderungen bei der hydraulischen Übersetzung $i_{hydraulisch}$ als auch bei der Weghysterese des Geberzylinders $d\_hyst_{Geberzylinder}$ berücksichtigt.

Bei einer sechsten Möglichkeit wird vorgeschlagen, eine mittlere Kennlinie für die Zuordnung zwischen dem Geber- und dem Nehmerzylinder ($i_{hydraulisch}$) zu berechnen und hieraus anteilig über die Weghysterese des Geberzylinders $d\_hyst_{Geberzylinder}$ beide Kennlinien zu berechnen. Auch bei dieser Möglichkeit werden sowohl Änderungen bei der hydraulischen Übersetzung $i_{hydraulisch}$ als auch bei der Weghysterese des Geberzylinders $d\_hyst_{Geberzylinder}$ in vorteilhafter Weise berücksichtigt.

Im weiteren wird gemäß einer Ausgestaltung der vorliegenden Erfindung eine Möglichkeit angegeben, mit der das übertragene Kupplungsmoment und/oder das Motormoment durch Messung der Längenänderung einer Torsionsfeder bestimmt wird.

Bei einem elektronischen Kupplungsmanagement (EKM) kann das übertragbare Kupplungsmoment $T_c$ über das Steuergerät mit Hilfe eines Aktors eingestellt werden. Dazu kann eine sog. nominelle Kupplungskennlinie in der Steuersoftware abgespeichert werden. Sie beinhaltet den Zusammenhang zwischen dem Verstellweg am Aktor und dem entsprechenden Wert für das übertragbare Kupplungsmoment $T_c$. Dieser Zusammenhang ist jedoch zeitlichen Schwankungen unterworfen, welche im wesentlichen durch Änderungen der Kupplungstemperatur, der Feuchtigkeit und des Verschleißzustandes verursacht werden können. Um die Änderungen zu berücksichtigen, kann z. B. periodisch der tatsächliche Wert von $T_c$ mit dem berechneten Wert verglichen und die Kennlinie entsprechend angepasst werden. Als Referenzmoment dient dabei das Motormoment $T_e$. Dieses kann z. B. vom Motormanagement geliefert werden. Dabei wird das Motormoment $T_e$ jedoch nicht gemessen, sondern mit Hilfe mehrdimensionaler Kennfelder ausgewertet. Im unteren Bereich des Motors und im Schubbetrieb ist der vom Motormanagement gelieferte Wert von $T_e$ relativ ungenau.

Demnach liegt der vorliegenden Erfindung die Aufgabe zugrunde, eine Methode bzw. ein Verfahren zum Messen des Drehmoments an der Kupplung bzw. an der Getriebeeingangswelle vorzuschlagen.

Vorzugsweise kann das an der Kupplung anliegende Drehmoment T durch Messung der Längenänderung • • der Torsionsfeder der Kupplung bestimmt werden. Die Messung der Längenänderung • • kann durch kontaktloses Auslösen eines Näherungsschalters oder dgl. erfolgen, wobei ein Signalgeber mit der Belagscheibe und ein zweiter Signalgeber mit der Kupplungsnabe verbunden sind.

Demnach erfolgt die Momentenberechnung unter der Kenntnis der Stauchung bzw. Dehnung • • der Torsionsfeder. Die hier beschriebene Momentenmessung kann z. B. auf einer Messung des Verdrehwinkels • • zwischen der Belagseite und der Nabenseite der Kupplung beruhen. Da beide Seiten über eine Torsionsfeder miteinander verbunden sind, kann aus dem bekannten Drehwinkel • • und der Kennlinie der Torsionsfeder das an der Kupplungsscheibe anliegende Drehmoment T berechnet werden.

In Figur 7 ist ein Diagramm einer Hysterese-Kennlinie für eine Torsionsfeder einer Kupplung dargestellt, wobei das Drehmoment über dem Verdrehwinkel dargestellt ist. Wenn nun für • • der Wert 5° gemessen wird, entspricht dies 99 Nm falls • • zum Zeitpunkt der Messung sich gerade vergrößert. Andernfalls ergibt sich ein Drehmoment von T = 59 Nm. Wenn die Kupplung während der Messung des Verdrehwinkels • • schlupft, ist das Drehmoment T identisch mit dem übertragbaren Kupplungsmoment $T_c$ und dem Moment $T_e - J \cdot 2 \cdot \pi \cdot \dot{n}$, wobei J das Trägheitsmoment von Motor und Schwungrad und n die zeitliche Ableitung der Motordrehzahl ist. Bei haftender Kupplung ist das Drehmoment T gleich dem Moment $T_e - J \cdot 2 \cdot \pi \cdot \dot{n}$. Insgesamt wird in Figur 7 die einer Torsionsfeder einer Kupplung beispielhaft gezeigt.

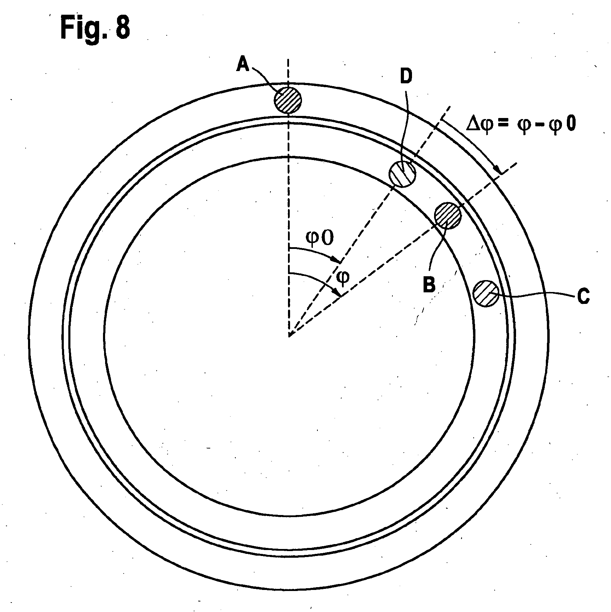

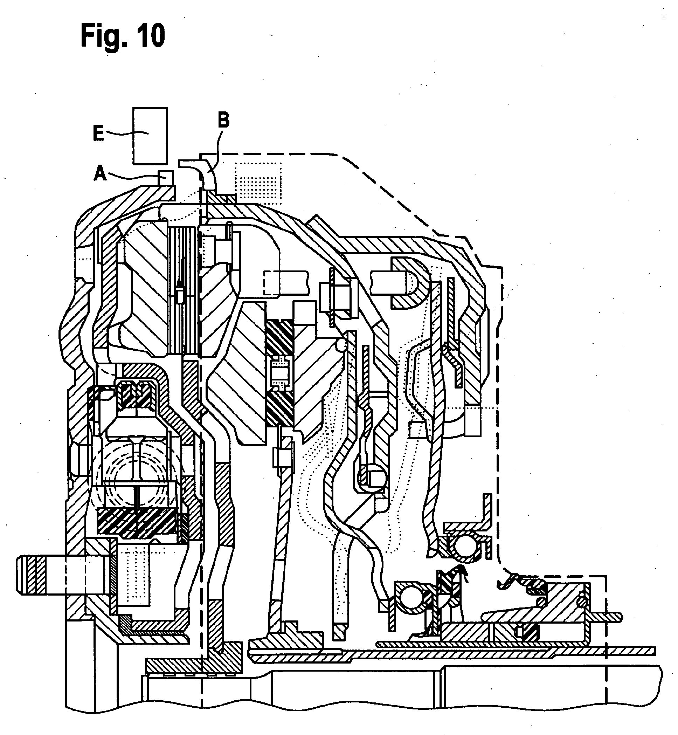

Zur Messung des Drehwinkels • • kann bevorzugt jeweils ein Signalgeber A für einen Näherungsschalter mit der Belagseite und bevorzugt ein Signalgeber B mit der Nabenseite Hysteresekennlinie bei belasteter Kupplung beispielsweise fest verbunden sein. Dies ist insbesondere aus den Figuren 8 und 10 ersichtlich. Der Winkel zwischen den beiden Signalgebern A, B bei unbelasteter Kupplung, also T = 0, wird als • ₀ bezeichnet. Wird nun von der Kupplung ein Moment übertragen, verändert sich der Winkel zwischen den Signalgebern A, B. Dieser Winkel wird mit • bezeichnet, welcher sich durch Messung des zeitlichen Abstands • T zwischen dem Signal des Signalgebers B und dem Signal des Signalgebers A ermittelt wird. Daraus ergibt sich folgende Gleichung:

$$\varphi = \omega \cdot \Delta t$$

wobei ω die Winkelgeschwindigkeit der Nabenseite ist.

Der Verdrehwinkel • • wird gemäß Figur 8 durch folgende Beziehung gegeben:

$$• • = • - •_0$$

Für die Messung von ω kann ein weiterer Signalgeber C nabenseitig befestigt sein, welcher durch einen grauen Punkt in Figur 8 angedeutet ist. Aus der Zeitdifferenz zwischen dem Signal des nabenseitig vorgesehenen Signalgebers C und des Signalgebers B, welcher ebenfalls mit der Nabe verbunden ist, kann ω ermittelt werden. Mit D ist ein mit der Nabe verbundener Signalgeber bei unbelasteter Kupplung gekennzeichnet.

Um für jeden Umlauf der Nabe der Kupplung mehrere Messungen für ω und • • zu erhalten, können mehrere Triplets von den Signalgebern A, B, C bevorzugt an der Nabeseite und der Belagseite angebracht werden. Für jeden Triplet (Drilling) von Signalgebern A, B, C wird an der Innenseite der Kupplungsglocke jeweils ein Signalnehmer angebracht. Bei Verwendung von induktiven Signalnehmern sind die Signalgeber kleine Ausbuchtungen, Bolzen oder dgl. Es ist auch möglich andere Signalnehmer und entsprechende Signalgeber vorzusehen.

Insgesamt wird in Figur 8 schematisch die Messung des Drehwinkels • • der Torsionsfeder der Kupplung dargestellt.

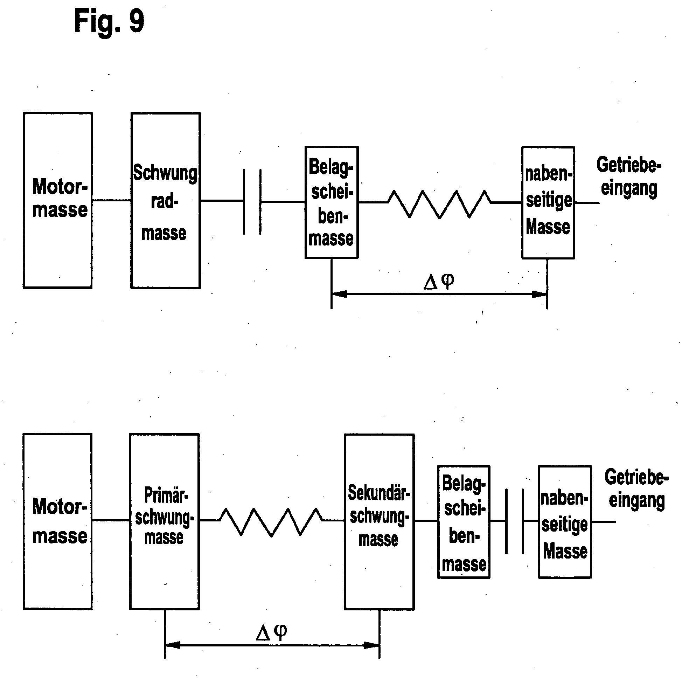

In Figur 9 ist schematisch die Verteilung von Drehmassen und der Torsionsfeder bei einer konventionellen Kupplung (oben) und bei einem Zwei-Massen-Schwungrad (unten) dargestellt. Aus Figur 9 ist ferner ersichtlich, dass die Torsionsfeder eines konventionellen Kupplungssystems auf der Getriebeseite der Reibkupplung vorgesehen ist. Die Torsionsfeder verbindet die Belagsscheibe mit der Kupplungsnabe. Die Winkelgeschwindigkeit ω der Nabe ist demnach die Winkelgeschwindigkeit der Getriebeeinganswelle. Die Bestimmung von • • und T kann nach dem oben beschriebenen Verfahren durchgeführt werden. Der Wert von der Winkelgeschwindigkeit ω wird auch im Steuercode des elektronischen Kupplungsmanagement (EKM) und des automatisierten Schaltgetriebes (ASG) verarbeitet. Bisher wird die Winkelgeschwindigkeit ω aus den Raddrehzahlen berechnet. Dies hat unter anderem zwei Nachteile. Die Berechnung ist nicht so genau wie bei der erfindungsgemäßen Bestimmung und kann nur durchgeführt werden, wenn das Getriebe nicht in Neutralstellung ist.

Bei der erfindungsgemäßen Bestimmung des Drehmoments ergibt sich der zusätzliche Vorteil, dass die Getriebeeingangsdrehzahl noch exakter ermittelt werden kann. Mit einem Sensor werden somit zwei für die Steuerung wichtige Größen gemessen.

Ferner ist Figur 9 zu entnehmen, dass bei einem Zwei-Massen-Schwungrad die Torsionsfeder auf der Motorseite der Kupplung liegt, nämlich zwischen der Primär- und der Sekundärmasse. Dies ist insbesondere in der unteren Darstellung in Figur 9 gezeigt.

Die Winkelgeschwindigkeit ω ist identisch mit der Winkelgeschwindigkeit der Primärmasse, welche wiederum äquivalent mit der Motordrehzahl n ist. Demnach kann statt der Winkelgeschwindigkeit ω der Wert $2 \cdot \pi \cdot n$ verwendet werden. Da der Wert der Motordrehzahl von der Motorsteuerung geliefert wird, kann in vorteilhafter Weise auf eine Messung der Winkelgeschwindigkeit ω verzichtet werden. Damit kann für eine Messung der Winkelgeschwindigkeit ω derselbe Signalnehmer verwendet werden, der zur Messung des zeitlichen Abstands • T eingesetzt wird.

In Figur 10 ist ein Schnitt durch ein Zwei-Massen-Schwungrad mit Näherungsschalter dargestellt, wobei ein Signalnehmer mit E und die aus Figur 8 bekannten Signalgeber mit A und B gekennzeichnet sind. Auf diese Weise wird der Drehzahlsensor der Motorsteuerung redundant, sodass auf ihn verzichtet werden kann.

Ferner wird eine erweiterte Drehzahltoleranz bevorzugt für eine EOL-Tastpunkt-Ermittlung (end of line) erläutert.

Insbesondere im Herstellungswerk wird am Bandende der Tastpunkt des Getriebes gelernt. Ein erfolgreicher Lernvorgang erfordert ein konstantes Motormoment. Da am Bandende der Verbrennungsmotor zum erstenmal gestartet wird, kann das Motormoment zu diesem Zeitpunkt noch sehr instabil sein. Daher wird die Tastpunkt-Ermittlung erst nach einer definierten Warmlaufzeit aktiviert. Nach dieser Warmlaufzeit kann davon ausgegangen werden, dass das Moment stabil ist, um eine korrekte Tastpunkt-Ermittlung durchzuführen. Eine Überprüfung des Motormomentes bzw. der Motordrehzahl bezüglich eines konstanten Verlaufes findet bisher am Bandende nicht statt.

Beispielsweise durch einen Fehler bei dem Verbrennungsmotor, wie z. B. eine nicht angeschlossenen Unterdruckleitung oder dgl., kann der Motor trotz abgelaufener Warmlaufzeit kein ausreichend stabiles Motormomentsignal liefern. Dies macht sich insbesondere durch einen Sägezahnverlauf bei der Motordrehzahl bemerkbar. Derartige Fehler führen nur unter bestimmten Voraussetzungen zum Eintrag eines Fehlers in den Fehlerspeicher der Motorsteuerung. Somit kann eine zusätzliche Überwachung des Fehlerspeichers der Motorsteuerung nur unter Umständen vorteilhaft sein.

Eine weitere Möglichkeit könnte eine Überwachung des Motormoments bzw. der Motordrehzahl bei der automatischen Tastpunkt-Ermittlung im Fahrbetrieb sein. Dabei ist das zulässige Toleranzband jedoch zu eng, als dass es für die Tastpunkt-Ermittlung am Bandende verwendet werden kann, da das Moment am Bandende auch nach der Warmlaufzeit noch sehr schwankt.

Demnach liegt die Aufgabe zugrunde eine geeignete Überwachung einzuführen, an Hand derer das stark schwankende Motormoment detektiert werden kann, um das Einlernen eines falschen Tastpunktes zu vermeiden.

Eine Überwachung des Motormomentes bzw. der Motordrehzahl findet bei der automatischen Tastpunkt-Ermittlung im Fahrbetrieb statt. Dabei ist das zulässige Toleranzband jedoch zu eng, als das es für die Tastpunkt-Ermittlung am Bandende bzw. beim Service verwendet werden kann.

Demnach wird für die Tastpunkt-Inbetriebnahme (TT-Inbetriebnahme) ein erweitertes Toleranzband vorgeschlagen, welches nur bei der Tastpunkt-Inbetriebnahme am Bandende bzw. beim Service Anwendung findet. Dieses erweiterte Toleranzband kann so ausgestaltet sein, das es geringfügige Momenten- bzw. Drehzahlstreuungen zulässt, jedoch starke Schwankungen, wie sie beim Sägezahnverlauf der Motordrehzahl typisch sind, detektiert bzw. erkennt.

Wenn eine Tastpunkt-Ermittlung am Bandende oder dgl. mittels Test angefordert wird, kann die Tastpunkt-Ermittlung gestartet und gleichzeitig die Motordrehzahl und das Motormoment überwacht werden. Wenn sich die Motordrehzahl bzw. das Motormoment während der Tastpunktermittlung außerhalb des Toleranzbereiches bzw. Toleranzbandes befindet, kann die Tastpunkt-Ermittlung mit dem Fehler "Motor instabil" verlassen.

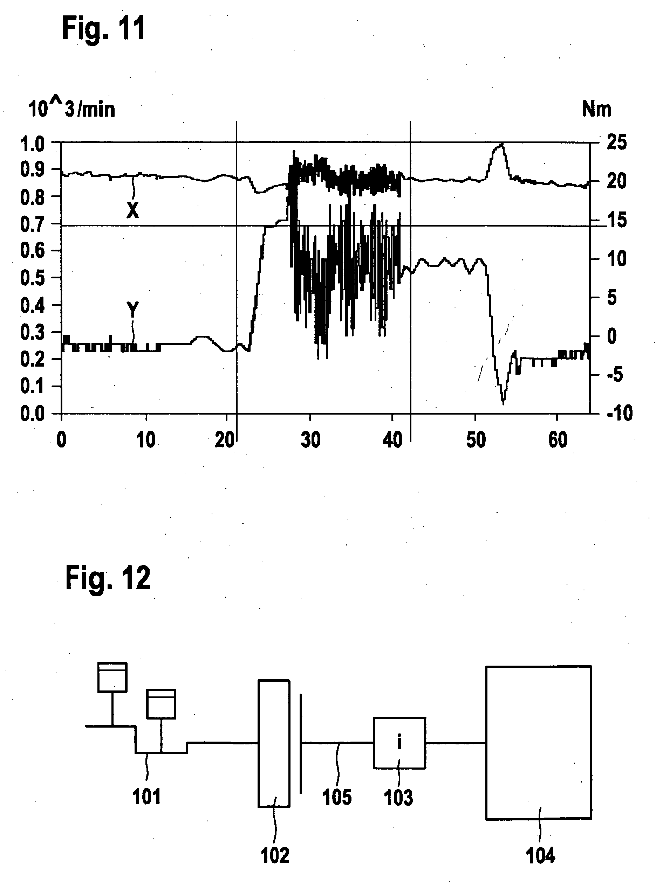

In Figur 11 sind Messungen der Motordrehzahl X und des Motormomentes Y des Verbrennungsmotors mit und ohne angeschlossene Unterdruckleitungen über der Zeit dargestellt, wobei im ersten Drittel des Diagramms die Verläufe mit angeschlossener Unterdruckleitung und im zweiten Drittel des Diagramms die Verläufe ohne angeschlossene Unterdruckleitung gezeigt sind. Eine waagerecht verlaufende Linie bei 700 Umdrehungen/min bzw. bei 15 Nm kennzeichnet den Grenzwert für die TP-Ermittlung. Aus dem Verlauf der Motordrehzahl X und des Motormomentes Y ergibt sich in einem Zeitraum von etwa 0 bis 20 sec. keine Fehlfunktion. Die gemessenen Verläufe des Motormoments Y und der Motordrehzahl X sind relativ konstant in diesem Zeitraum. Nach etwa 22 sec. wird der Unterdruckschlauch abgezogen, welches sich durch starke Schwankungen im Verlauf des Motormomentes Y und der Motordrehzahl X bemerkbar macht. Nach weiteren 22 sec. wird der Unterdruckschlauch wieder aufgesteckt. Als Resultat beruhigen sich die Verläufe und kehren in die ursprünglichen Verläufe bzw. Werte zurück. Femer ist ein Grenzwert für das Motormoment etwa im Bereich von 14 Nm beispielhaft dargestellt. Eine Überschreitung des Grenzwertes während der Tastpunkt-Ermittlung führt dann zum Abbruch der Tastpunkt-Ermittlung.

Die erfindungsgemäße Einführung eines erweiterten Drehzahltoleranzbandes kann bevorzugt bei sämtlichen Fahrzeugen mit einem elektronischen Kupplungsmanagement (EKM) und/oder mit einem automatisierten Schaltgetriebe (ASG) zum Einsatz kommen.

Nachfolgend wird eine Erhöhung der Schnüffelfrequenz, insbesondere bei einem Kaltstart eines Fahrzeuges,

EP 1 418 083 A2

vorgeschlagen.

Es hat sich gezeigt, dass sich, wenn Fahrzeuge bei tiefen Temperaturen kalt gestartet werden, die hydraulische Strecke des Kupplungszentralausrückers bei einer Erwärmung thermisch ausdehnt. Die Aufwärmgeschwindigkeit beim Warmfahren ist höher als die thermischen Schwankungen während des Fahrbetriebs. Somit ist es möglich, wenn nur selten oder gar kein thermischer Ausgleich der hydraulischen Strecke während des Aufwärmens stattfindet, dass sich der Kupplungstastpunkt verschiebt.

Demnach liegt eine Aufgabe der Erfindung zugrunde, eine Maßnahme anzugeben, bei der beim Warmfahren der durch die Erwärmung der hydraulischen Strecke bedingte Fehler des Kupplungstastpunktes kompensiert wird.

Bei Temperaturen unter einem Schwellenwert $T_c$, z.B. 70° C, erwärmt sich die hydraulische Strecke nach einem Kaltstart relativ schnell. Oberhalb dieser Schwellentemperatur wird dann die Aufwärmung langsamer erfolgen. Demnach kann erfindungsgemäß bevorzugt unterhalb des Schwellenwerts $T_c$ die Schnüffelfrequenz bei geschlossener Kupplung von 60 sec. auf 30 sec. und im Neutralgang von 3 min. auf 30 sec. oder auch auf andere kalibrierbare Werte herabgesetzt werden. Auf diese Weise wird die Wahrscheinlichkeit, dass es bei Erfüllen der Schnüffelbedingungen zu einem Ausgleich der hydraulischen Strecke kommt, erheblich erhöht. Somit kann eine Verschiebung des Kupplungstastpunktes vermieden werden, so dass der Kupplungstastpunkt konstant bleibt.

Diese erfindungsgemäße Vorgehensweise kann bevorzugt bei jedem System mit hydraulischer Kupplungsbetätigung zum Einsatz kommen.

Ferner wird eine Momentenadaption des Verbrennungsmotors bei Fahrzeugen mit automatisierter Kupplung (EKM) oder mit automatisch geschaltetem Getriebe erläutert.

Es hat sich gezeigt, dass ungenaue Momente des Verbrennungsmotors die Steuerung der Kupplung bei Systemen mit automatisierten Kupplungen erschwert.

Das Triebstrangmanagement moderner Fahrzeuge erfordert genaue Angaben zum abgegebenen und aufgenommenen Drehmoment der einzelnen Komponenten. Eine wichtige Größe ist z. B. das Drehmoment, welches von dem Verbrennungsmotor abgegeben wird. Dieses setzt sich bevorzugt aus drei Teilen zusammen:

$$M_{Mot} = M_{Ind} - M_{Reib}\left(-M_{Verbr}\right)$$

$M_{Ind}$ = indiziertes chemisches Moment an der Kurbelwelle (z. B. aus Ansaugluft bestimmt)
$M_{Reib}$ = Gegenmoment durch Reibungsverluste im Motor (in der Regel aus Kennfeld $M(n_{Mot}, -t_{Mot})$)
$M_{Verbr}$ = Gegenmoment durch zusätzliche Aggregate, wie z. B. Klimaanlage (in der Regel aus Kennfeld $M(n_{Mot}, ?)$).
Das Zuschalten dieser Aggregate ist dem Motor bekannt.

Insbesondere das Gegenmoment $M_{Reib}$ kann bei den Verbrennungsmotoren ungenau sein, da dieses nur aus einem Kennfeld bestimmt wird. Z. B. produktbedingte Schwankungen der Motorreibung sind dabei nicht berücksichtigt.

Bei konventionellen Handschaltgetrieben kann die Motorsteuerung nicht feststellen, ob der Triebstrang offen ist, um somit z. B. im Leerlauf das Schleppmoment zu adaptieren. Durch einen mechanischen Schalter am Kupplungspedal bzw. am Getriebe kann der Zustand Triebstrang offen sicher erkannt werden.

Systeme mit automatisierten Kupplungen können dagegen der Motorsteuerung über ein geeignetes Interface, z. B. dem CAN-Bus mitteilen, ob der Triebstrang geöffnet ist. Es kann auch diese Information über andere geeignete Verbindungen geliefert werden.

Systeme mit automatisch betätigtem Getriebe können ebenfalls der Motorsteuerung mitteilen, wenn sich das Getriebe in "Neutral" befindet, also kein Kraftschluss zwischen Motor und Fahrzeug vorliegt.

Für die Adaption des Motormoments bei geöffnetem Triebstrang kann folgende Gleichung verwendet werden:

$$M_{Mot} = J_{Antrieb} \cdot \frac{\Delta n_{Mot}}{\Delta t} \cdot \frac{\pi}{30}$$

Abhängig von der Bauart des Getriebes sollte für das Trägheitsmoment $J_{Antrieb}$ unterschieden werden, ob sich das Getriebe in "Neutral" befindet oder ob nur die Kupplung offen ist. Für den Zustand "Kupplung offen" ergibt sich die Gleichung

$$J_{Antrieb} = J_{Kurbelwelle} + J_{Schwungrad}$$

Für den Zustand "Kupplung geschlossen" ergibt sich die Gleichung

$$J_{Antrieb} = J_{Kurbelwelle} + J_{Schwungrad} + J_{Eingangswelle}$$

In Figur 12 ist der Antriebsstrang mit dem Verbrennungsmotor 101 mit Kurbelwelle, dem Schwungrad 102, dem Getriebe 103 und mit dem Abtrieb 104 schematisch dargestellt, wobei zwischen dem Schwungrad 102 und dem Getriebe der Getriebeeingang 105 liegt.

Um nun die beiden oben genannten Zustände, nämlich "Neutral" und "Kupplung offen" eindeutig zuzuordnen, kann erfindungsgemäß folgende zusätzliche Schnittstelle zur Motorsteuerung vorgesehen werden. Als Ausgabe der Kupplungssteuerung kann der Zustand "Kupplung offen"und "schlupft/geschlossen" vorgesehen werden. Als Ausgabe der Getriebesteuerung kann der Zustand Getriebe "Neutral" und "Gang eingelegt" ausgegeben werden.

Grundsätzlich kann die Motorsteuerung immer dann eine Adaption durchführen, wenn der Triebstrang geöffnet ist, also der Motor vom Abtrieb getrennt ist. Der Triebstrang ist geöffnet, wenn die Kupplung offen ist. Ferner ist der Triebstrang geöffnet, wenn die Kupplung geschlossen ist und sich das Getriebe in "Neutral" befindet.

Grundsätzlich kann dies auch auf Getriebesysteme mit mehreren Kupplungen bzw. mehreren Teilgetrieben erweitert werden, wie z. B. dem PSG- oder dem USG-Getriebe.

Eine Adaption ist bei derartigen Systemen möglich, wenn alle Triebstränge geöffnet sind. Zusätzlich sollte das Trägheitsmoment $J_{Antrieb}$ angepasst werden. Dabei können folgende Randbedingungen bei der Bewertung der Adaption berücksichtigt werden, wobei die nachfolgende Aufzählung nicht abschließend sein sollte:

1. Das Gegenmoment durch zusätzliche Aggregate $M_{Verbr}$ sollte bekannt sein und sich im Verlauf der Adaption nicht sprungartig ändern, wie z. B. durch das Einund Ausschalten der Klimaanlage oder dgl.

2. Die Beschleunigung des Motors sollte aus der Ableitung der Motordrehzahl über sinnvolle Zeitintervalle gemittelt werden. Dementsprechend ist der drehzahlabhängige Adaptionswert bei der gemittelten Drehzahl $n_{Mot}$ zu betrachten.

3. Die Motortemperatur spielt bei der Genauigkeit des Motormoments eine wesentliche Rolle. Deshalb sollte überprüft werden, ob während der Warmlaufphase eine Adaption sinnvoll ist. Beispielsweise kann hier das indizierte Moment $M_{Int}$ ungenau werden und damit die Bestimmung von dem Gegenmoment durch Reibungsverluste $M_{Reib}$ fehlerhaft werden.

Die genannten Randbedingungen können beliebig miteinander kombiniert und ergänzt werden. In der nachfolgenden Tabelle werden typische Fahrsituationen beschrieben, bei denen eine Adaption möglich ist. Es ist auch möglich weitere Fahrsituationen anzugeben, bei denen auch eine Adaption vorteilhaft ist.

| Situation | Adaptierbare Größe | Beschreibung |
|---|---|---|
| Motor im Leerlauf Triebstrang offen | Schleppmoment $M_{Reib}^{Adapt}$ | Der Motor hält über seinen Drehzahlregler eine konstante Drehzahl. Dabei sollte das resultierende Moment $M_{Mot} = 0$ Nm sein (weil $\bullet\, n_{Mot}/\bullet\, t = 0$). Das adaptierte Reibmoment ist dann $M_{Reib}^{Adapt}(n_{Mot})=M_{Ind}(n_{Mot})-M_{Verbr}$ |
| Während Schaltungen | Schleppmoment | Wird während einer Schaltung der |
| Triebstrang offen (keine Zugkraftunterstützung) | $M_{Reib}^{Adapt}$<br><br>Indiziertes Moment $M_{Reib}^{Adapt}$ | Triebstrang geöffnet, kann anhand des Drehzahlgradienten das resultierende Motormoment bestimmt werden. Bei bekanntem $M_{Verbr}(n_{Mot})$ kann das Schleppmoment $M_{Reib}(n_{Mot})$ bestimmt werden. $M_{Reib}^{Adapt}(n_{Mot})=M_{Ind}(n_{Mot})-M_{Verbr}-M_{Mot}$ Bei Rückschaltungen mit Zwischengas ($M_{Ind}$>Schwelle) kann auch auf das indizierte Moment $M_{Ind}(t)$ geschlossen werden. $M_{Reib}^{Adapt}(n_{Mot})=M_{Mot}+M_{Reib}(n_{Mot})+M_{Verbr}$ |

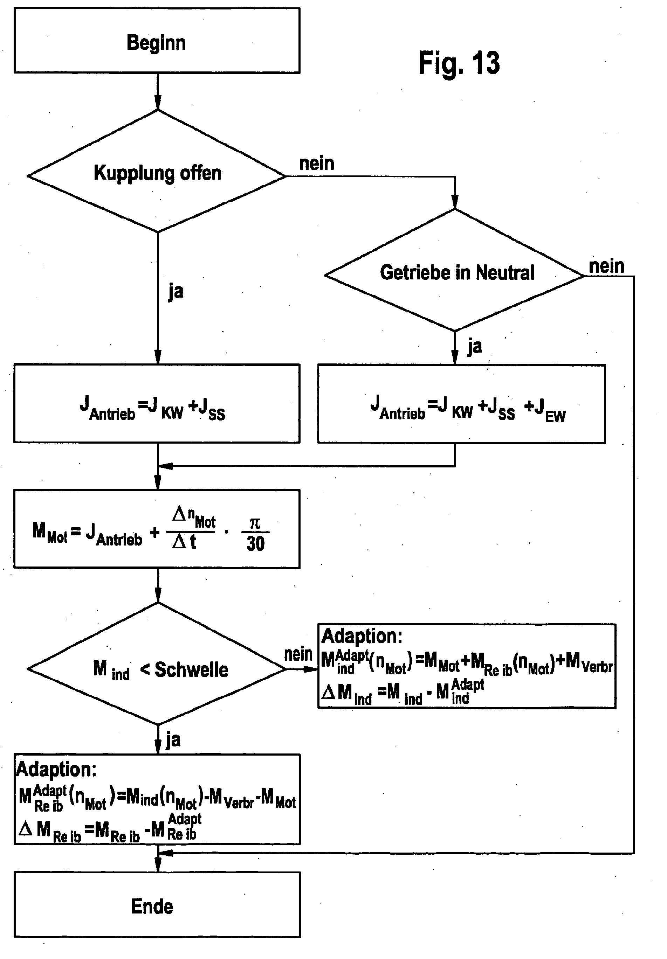

In Figur 13 ist beispielhaft ein Flussdiagramm einer möglichen Adaption des Motormoments dargestellt.
Bevorzugt kann die Adaption bei Getrieben mit automatisierter Kupplung bzw. automatisiertem Getriebe, also bei einem EKM-, ASG-, USG-, PSG-System oder dgl. eingesetzt werden.

**Patentansprüche**

1. Verfahren zum Adaptieren des Greifpunktes einer Kupplung, insbesondere eines automatisierten Getriebes, bei dem als Kupplungsmoment ein Tastmoment an der Kupplung vorgegeben wird, **dadurch gekennzeichnet, dass** das Tastenmoment derart erhöht wird, bis zumindest ein gewünschtes Kupplungssollmoment erreicht wird.

2. Verfahren zum Durchführen einer Tastpunktadaption an einer Kupplung, insbesondere eines automatisierten Getriebes, bei dem in Abhängigkeit einer Stellmomentenkennlinie des Ausrücksystems der Kupplung ein Tastpunkt adaptiert wird, **dadurch gekennzeichnet, dass** als zusätzlicher Punkt aus der Stellmomentenkennlinie das Kriechmoment adaptiert wird.

3. Verfahren zum Durchführen einer Greifpunktadaption bei einer aktivierten Kriechfunktion an einer Kupplung eines automatisierten Getriebes, **dadurch gekennzeichnet, dass** das dem Greifpunkt entsprechende Kupplungsmoment über eine Zeitfunktion adaptiert wird.

4. Verfahren nach Anspruch 3, **dadurch gekennzeichnet, dass** ein unterer Grenzwert und/oder ein oberer Grenzwert für das einzustellende Kupplungssollmoment verwendet wird.

5. Verfahren zum Ansteuern einer Kupplung insbesondere eines elektronischen Kupplungsmanagements, bei dem ein hydraulisches Ausrücksystem mit zumindest einem Geberzylinder und einem Nehmerzylinder verwendet wird, **dadurch gekennzeichnet, dass** bei der Betätigung der Kupplung eine vorliegende Weghysterese des Ausrücksystems kompensiert wird.

6. Verfahren zum Messen eines Motor- und/oder eines Kupplungsmomentes bei einem zumindest teilautomatisierten Getriebe, **dadurch gekennzeichnet, dass** das Motorund/oder das Kupplungsmoment durch eine gemessene Längenänderung einer Torsionsfeder der Kupplung bestimmt wird.

7. Verfahren zum Überwachen des Motormoments und/oder der Motordrehzahl bei einem Fahrzeug mit einem Antriebsmotor und einem automatisierten Getriebe im Antriebsstrang bei einer Tastpunktermittlung während einer Inbetriebnahme des Getriebes, **dadurch gekennzeichnet, dass** ein erweitertes Toleranzband bezogen auf die Motordrehzahl verwendet wird, welches derart ausgestaltet ist, das geringfügige Motormomenten- oder Drehzahlstreuungen zugelassen werden, jedoch starke Schwankungen detektiert werden.

8. Verfahren zum Ansteuern einer Kupplung eines automatisierten Getriebes, bei dem zum Betätigen der Kupplung ein hydraulisches Ausrücksystem verwendet wird, **dadurch gekennzeichnet, dass** nach einem Kaltstart der durch die Erwärmung der hydraulischen Strecke verursachte Fehler des Tastpunktes der Kupplung kompensiert wird.

9. Verfahren nach Anspruch 8, **dadurch gekennzeichnet, dass** die Schnüffelfrequenz bei dem Ausrücksystem temperaturabhängig verändert wird.

10. Verfahren zum Durchführen einer Momentenadaption bei zumindest einem teilautomatisierten Getriebe mit wenigstens einer Kupplung in einem Antriebsstrang eines Fahrzeuges, **dadurch gekennzeichnet, dass** die Momentenadaption bei geöffnetem Antriebsstrang durchgeführt wird.

**Fig. 1**

EP 1 418 083 A2

# Fig. 2

**Nominelle Stellmomentenkennlinie**

# Fig. 3

## Fig. 4

△ GP

+x mm

Kupl. sollmoment
[ Nm ]

10    20    30

-x mm

4 Nm                30 Nm

## Fig. 5

p Leitung

a
b

s_Ausr.

a, b

s_Geberzyl.

# Fig. 6

# Fig. 7

**Fig. 8**

$\triangle\varphi = \varphi - \varphi 0$

## Fig. 9

Motor-masse — Schwung rad-masse — | | — Belag-schei-ben-masse — /\/\/\/ — naben-seitige Masse — Getriebe-eingang

$\Delta \varphi$

Motor-masse — Primär-schwung-masse — /\/\/\/ — Sekundär-schwung-masse — Belag-schei-ben-masse — | | — naben-seitige Masse — Getriebe-eingang

$\Delta \varphi$

**Fig. 10**

## Fig. 11

## Fig. 12

**Fig. 13**

```
┌─────────────┐
│   Beginn    │
└─────────────┘
       │
       ▼
   ◇ Kupplung offen ◇ ──nein──┐
       │                      │
       ja                     ▼
       │              ◇ Getriebe in Neutral ◇ ──nein──┐
       │                      │                        │
       ▼                      ja                       │
```

$$J_{Antrieb} = J_{KW} + J_{SS}$$

$$J_{Antrieb} = J_{KW} + J_{SS} + J_{EW}$$

$$M_{Mot} = J_{Antrieb} + \frac{\Delta n_{Mot}}{\Delta t} \cdot \frac{\pi}{30}$$

◇ $M_{ind} <$ Schwelle ◇ ──nein──►

**Adaption:**
$$M_{ind}^{Adapt}(n_{Mot}) = M_{Mot} + M_{Re\,ib}(n_{Mot}) + M_{Verbr}$$
$$\Delta M_{ind} = M_{ind} - M_{ind}^{Adapt}$$

ja

**Adaption:**
$$M_{Re\,ib}^{Adapt}(n_{Mot}) = M_{ind}(n_{Mot}) - M_{Verbr} - M_{Mot}$$
$$\Delta M_{Re\,ib} = M_{Re\,ib} - M_{Re\,ib}^{Adapt}$$

┌─────────────┐
│    Ende     │
└─────────────┘